# EUROPÄISCHE PATENTSCHRIFT

(11) **EP 4 190 995 B1**
(45) Veröffentlichungstag und Bekanntmachung des Hinweises auf die Patenterteilung: **28.05.2025**
(21) Anmeldenummer: 21212476.2
(22) Anmeldetag: 06.12.2021
(51) Int. Cl.: E04H 4/16, H04B 11/00, G01S 5/30

(54) **UNTERWASSERREINIGUNGSROBOTER**
UNDERWATER CLEANING ROBOT
ROBOT DE NETTOYAGE SOUS L'EAU

(43) Veröffentlichungstag der Anmeldung: 07.06.2023
(73) Patentinhaber: Mariner 3S AG, 5236 Remigen (CH)
(72) Erfinder: WINKLER, Roland, 5276 Wil AG (CH)
(74) Vertreter: EGLI-EUROPEAN PATENT ATTORNEYS

(56) Entgegenhaltungen:
- EP-B1- 3 282 071
- US-A- 3 675 261
- US-A- 5 569 371
- US-A1- 2013 318 728
- US-A1- 2019 011 928

## Beschreibung

Die vorliegende Erfindung bezieht sich auf einen Unterwasserreinigungsroboter sowie auf ein Verfahren zu seiner Steuerung.

Unterwasserreinigungsroboter werden verwendet, um Schwimmbecken mehr oder weniger automatisch zu reinigen. Generell wird dabei ein Reinigungsroboter auf einem speziellen Wagen an den Beckenrand geschoben, von wo aus er in das Wasser hinabgelassen wird. Der Roboter taucht dann automatisch und selbständig ab und fährt systematisch den Beckenboden ab, teilweise auch die Beckenwände. Dabei zieht er ein Kabel hinter sich her für die Stromzufuhr und für die Annahme von Befehlen, welche er durch Personal von ausserhalb des Beckens erhält. Ferner wird eine Software verwendet, die verhindert, dass der Roboter sich in den eigenen Kabeln verheddert oder um Wasserinseln herumfährt und sich dabei selber blockiert. Am Schluss der Reinigung taucht der Roboter an dem Ort, an dem er in das Wasser gelassen wurde, selbständig wieder auf oder das Auftauchen wird aktiviert, wonach der Roboter meist manuell aus dem Wasser gezogen wird. Von dort aus wird er wieder auf den Zustellwagen geladen und weggefahren. Anschliessend werden dann die Wasserfilter gereinigt.

In der Regel läuft der ganze Vorgang völlig automatisch ab, so dass das Personal den Roboter nur zum Wasser bringt und ins Wasser lässt und umgekehrt wieder aus dem Wasser zieht und auf den Zustellwagen lädt und dass nach dem Reinigungsvorgang die Filter gereinigt werden müssen.

US 2019/0011928 A1 beschreibt ein System zur Steuerung von beweglichen Haushaltsrobotern. Dabei wird mittels einer Ultraschallübertragung zwischen dem Roboter und Grenzposten eine Entfernungsbestimmung des Roboters von den Grenzposten durch Laufzeitmessungen durchgeführt. Die Datenübertragung zwischen dem Roboter und den Grenzposten erfolgt über eine Funk-Kommunikation.

US 5,569,371 A beschreibt ein Unterwassernavigationssystem für Poolreinigungsroboter. Energieversorgung und Datenübertragung erfolgt dabei über ein Kabel. Mithilfe einer Ultraschalübertragung unter Wasser wird durch Triangulation eine Positionsbestimmung des Roboters durchgeführt.

EP 3 282 071 B1 beschreibt ein System zur Steuerung des gleichzeitigen Betriebs mehrerer Poolreinigungsroboter. Die Energiezufuhr erfolgt über ein Kabel. Es wird zwar allgemein eine Kommunikation zwischen mehreren Robotern erwähnt, die beispielsweise per Ultraschall erfolgen kann. Wie diese Kommunikation ausgeführt ist, wird aber nicht näher beschrieben. Ansonsten wird Ultraschall auch hier lediglich zur Messung von Entfernungen oder von Abstandsänderungen zwischen Robotern beschrieben. Die Kommunikation von aussen zu dem Roboter erfolgt über eine Funkstrecke zwischen einer festen Antenne und einer schwimmenden Antenne oder einer anderen über die Wasseroberfläche hinausreichenden Antenne.

Die Aufgabe der vorliegenden Erfindung besteht darin, einen verbesserten Unterwasserreinigungsroboter und ein verbessertes Verfahren zu seiner Steuerung bereitzustellen, bei dem durch ein hinterhergezogenes Kabel möglicherweise auftretende Probleme wie das oben beschriebene Verheddern oder Blockieren vermieden werden können.

Die Aufgabe wird gelöst durch ein System zur Unterwasserreinigung gemäss Anspruch 1 beziehungsweise ein Verfahren gemäss Anspruch 7. Weiterbildungen der Erfindung sind jeweils in den Unteransprüchen angegeben. Dabei können die Verfahren auch durch die untenstehenden bzw. in den Unteransprüchen ausgeführten Merkmalen der Vorrichtungen weitergebildet sein oder umgekehrt bzw. die Merkmale der Verfahren und/oder der Vorrichtungen können auch jeweils untereinander zur Weiterbildung genutzt werden.

Durch einen solchen Unterwasserreinigungsroboter können beispielsweise die durch ein hinterhergezogenes Kabel möglicherweise auftretende Probleme wie das oben beschriebene Verheddern oder Blockieren vermieden werden.

Weitere Merkmale und Zweckmässigkeiten der Erfindung ergeben sich aus der Beschreibung von Ausführungsbeispielen anhand der beigefügten Zeichnungen.
- Fig. 1: zeigt ein Unterwasserreinigungssystem gemäss einer ersten Ausführungsform in einem Zustand, in dem ein Unterwasserreinigungsroboter auf einem Wagen an einem Beckenrand eines Wasserbeckens angeordnet ist.
- Fig. 2: zeigt das Unterwasserreinigungssystem gemäss der ersten Ausführungsform in einem Zustand, in dem der Unterwasserreinigungsroboter auf einem Grund des Wasserbeckens angeordnet ist.
- Fig. 3: zeigt ein Flussdiagramm für ein Verfahren zum Steuern eines Unterwasserreinigungsroboters in dem Unterwasserreinigungssystem gemäss der ersten Ausführungsform.

Im Folgenden werden mit Bezug auf die beigefügten Zeichnungen Ausführungsformen der vorliegenden Erfindung beschrieben.

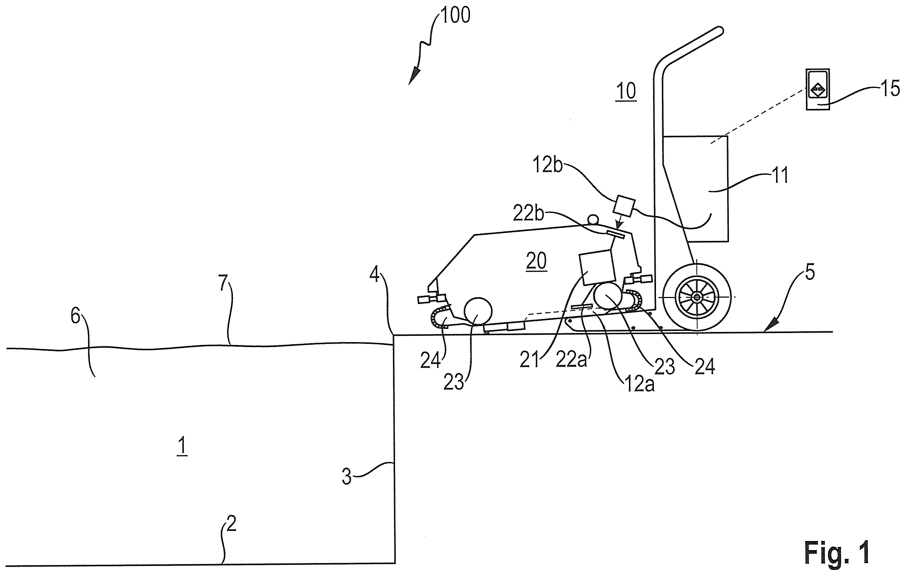

Fig. 1 zeigt ein Unterwasserreinigungssystem 100 gemäss einer ersten Ausführungsform. Ein Wasserbecken 1 weist einen Grund 2 und eine Seitenwand 3 auf. Das Wasserbecken 1 kann beispielsweise ein gefliestes, foliertes oder betoniertes Schwimmbecken oder ein Chromstahlbecken sein. Ein Beckenrand 4 bildet einen Übergang zwischen der Seitenwand 3 und einem das Becken umgebenden Boden 5. Das Wasserbecken 1 ist so mit Wasser 6 gefüllt, dass eine Wasseroberfläche 7 knapp unterhalb des Beckenrandes 4 liegt.

In dem in Fig. 1 gezeigten Zustand ist ein Wagen 10, auf den ein Unterwasserreinigungsroboter 20 aufgeladen ist, auf dem Boden 5 nahe dem Beckenrand 4 des Wasserbeckens angeordnet.

Der Wagen 10 ist beispielsweise als Transportkarren ausgebildet. Er enthält neben den zum Halten und Transportieren des Unterwasserreinigungsroboters 20 dienenden Elementen eine Steuereinheit 11 und einen oder mehrere Ladeanschlüsse 12 für den Unterwasserreinigungsroboter 20. Als Beispiel zeigt Fig. 1 eine Ladeplatte 12a, auf der der Unterwasserreinigungsroboters 20 aufsitzt und die in diesem Zustand Kontakt mit einem korrespondierenden Ladekontakt 22a des Unterwasserreinigungsroboters 20 hat, sowie einen Ladestecker 12b, der mit einer korrespondierenden Ladebuchse 22b des Unterwasserreinigungsroboters 20 verbindbar ist.

Die Bedienung der Steuereinheit kann an dieser selber erfolgen oder über eine Fernsteuereinheit 15. Die Steuereinheit 11 enthält ein Modem 13 oder ist mit einem Modem 13 verbunden.

Der Unterwasserreinigungsroboter 20 enthält eine Batterie 21, die zum Abgeben elektrischer Energie ausgebildet ist. Die Batterie 21 ist beispielsweise als wiederaufladbarer Ackumulator ausgebildet. Sie ist mit einem oder mehreren Ladeanschlüssen, beispielsweise dem Ladekontakt 22a und/oder der Ladebuchse 22b, verbunden und kann über diese aufgeladen werden.

Ferner enthält der Unterwasserreinigungsroboter 20 eine Fortbewegungseinrichtung 23, die zum Fortbewegen des Unterwasserreinigungsroboters 20 unter Wasser ausgebildet ist, und eine Reinigungseinrichtung 24 zum Reinigen eines unter Wasser befindlichen Objekts, beispielsweise des Grundes 2 und der Seitenwand 3 des Wasserbeckens 1. Die Fortbewegungseinrichtung 23 und die Reinigungseinrichtung 24 werden von der Batterie 21 mit Energie versorgt.

Schematisch sind in Fig. 1 die Fortbewegungseinrichtung 23 durch Räder, Raupen oder Walzen und die Reinigungseinrichtung 24 durch Bürstenwalzen dargestellt. Möglich sind auch zum Beispiel statische Bürsten, Hochdruck-Vorrichtungen oder Saugvorrichtungen. Die vorliegende Erfindung ist jedoch nicht darauf eingeschränkt und kann auf Unterwasserreinigungsroboter 20 mit beliebigen Fortbewegungs- und Reinigungseinrichtungen angewendet werden.

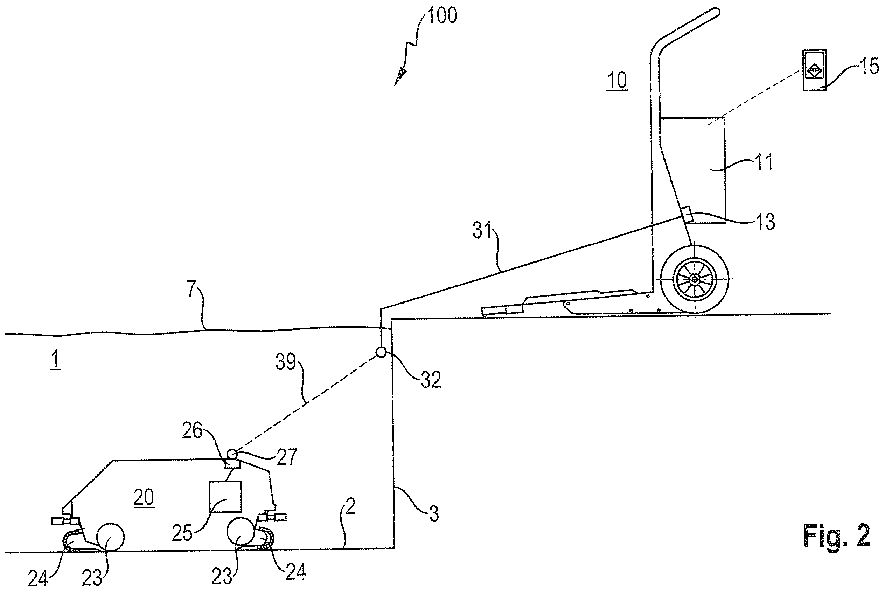

Wie aus Fig. 2 ersichtlich enthält der Unterwasserreinigungsroboter 20 ferner eine Steuereinrichtung 25, die zum Steuern der Fortbewegungseinrichtung 23 und/oder der Reinigungseinrichtung 24 dient. Die Steuereinrichtung 25 enthält ein Modem 26 oder ist mit einem Modem 26 verbunden. Das Modem 26 ist mit einem Ultraschalltransducer 27 verbunden, der an der Aussenseite des Unterwasserreinigungsroboters 20 angebracht ist.

Fig. 2 zeigt einen Zustand, in dem der Unterwasserreinigungsroboter 20 auf dem Grund 2 des Wasserbeckens 1 angeordnet ist.

Im Betrieb wird zunächst die Batterie 21 des Unterwasserreinigungsroboters 20 über die Ladeanschlüsse 22 geladen. Dann wird der Unterwasserreinigungsroboter 20 mittels des Wagens 10 auf dem Boden 5 bis an den Beckenrand 4 des Wasserbeckens gefahren. Anschliessend wird der Unterwasserreinigungsroboter 20 auf den Grund 2 des Wasserbeckens 1 hinabgelassen. Der Reinigungsroboter kann auch mit der Funkfernsteuerung ausserhalb des Wassers über eine kurze Strecke ins Wasser navigiert werden.

Ein Ultraschalltransducer 32 wird unterhalb der Wasseroberfläche 7 in dem Wasserbecken 1 angeordnet und über ein Kabel 31 mit dem Modem 13 des Wagens 10 verbunden.

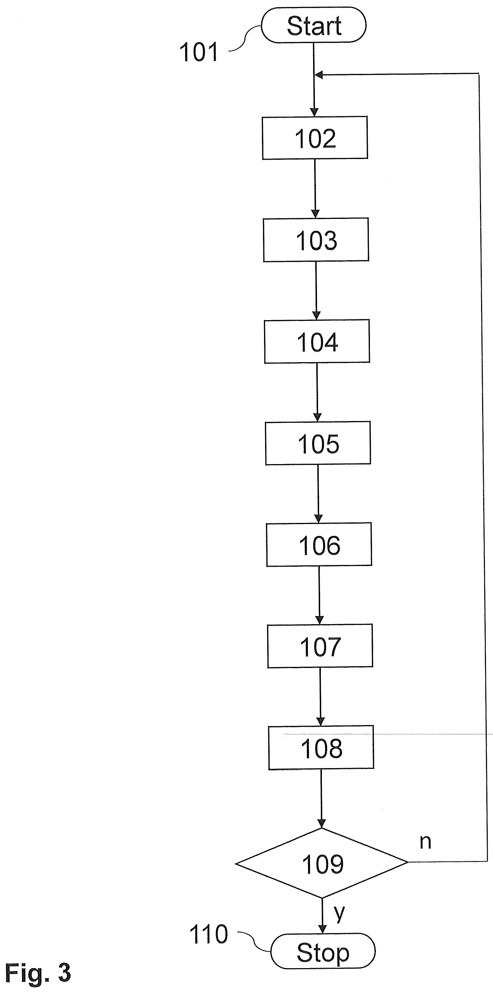

Angetrieben mit der von der Batterie 21 gelieferten elektrischen Energie bewegt sich der Unterwasserreinigungsroboter 20 mittels der Fortbewegungseinrichtung 23 unter Wasser fort. Er fährt beispielsweise den Grund 2 des Wasserbeckens 1 ab und reinigt diesen mittels der Reinigungseinrichtung 24. Die Steuerung des Unterwasserreinigungsroboters 20 erfolgt von der Steuereinheit 10 des Wagens aus über die Steuereinrichtung 25 des Unterwasserreinigungsroboters 20. Fig. 3 zeigt ein Flussdiagramm des Ablaufs dieser Steuerung:
- Der Ablauf startet in Schritt 101.
- In Schritt 102 werden Steuerbefehle und/oder -daten in der Steuereinheit 11 erzeugt.
- In Schritt 103 werden die Steuerbefehle und/oder -daten durch das Modem 13 moduliert und als elektrische Signale über das Kabel 31 zu dem Ultraschalltransducer 32 übertragen.
- In Schritt 104 werden die elektrischen Signale von dem Ultraschalltransducer 32 in Ultraschallsignale umgewandelt und in das Wasser 6 abgestrahlt.
- In Schritt 105 werden die Ultraschallsignale über eine Unterwasserultraschallstrecke 39 übertragen.
- In Schritt 106 werden die Ultraschallsignale von dem Ultraschalltransducer 27 des Unterwasserreinigungsroboters 20 empfangen und in elektrische Signale zurückverwandelt.
- In Schritt 107 werden die elektrischen Signale durch das Modem 13 demoduliert und zu der Steuereinrichtung 25 des Unterwasserreinigungsroboters 20 übertragen.
- In Schritt 108 führt die Steuereinrichtung 25 des Unterwasserreinigungsroboters 20 eine Steuerung entsprechend der empfangenen elektrischen Signale durch.
- In Schritt 109 wird eine Prüfung durchgeführt, ob der Befehl ausgeführt worden ist und ob der Reinigungsvorgang beendet ist.
- Wenn der Reinigungsvorgang beendet ist (y=yes), wird in Schritt 110 der Ablauf der Steuerung beendet, ansonsten (n=no) springt der Ablauf zu Schritt 102 zurück.

Der Ablauf der Steuerung ist so konzipiert, dass der Unterwasserreinigungsroboter 20 am Ende wieder zu der Stelle zurückgekehrt ist, an der er in das Wasser hinabgelassen wurde. Dort taucht er wieder auf, wird auf den Wagen 10 geladen und weggefahren. Anschliessend werden erforderliche Unterhalts- und allenfalls Wartungsarbeiten ausgeführt, beispielsweise das Reinigen der Wasserfilter und das Wiederaufladen der Batterie.

Die Kommunikation zwischen der Steuereinheit 11 am Beckenrand 4 und dem Unterwasserreinigungsroboter 20 im Wasserbecken 1 wird vorzugsweise über Ultraschallsignale in einem Frequenzband vorzugsweise zwischen 10 kHz und 400 kHz durchgeführt, welches für die Ausbreitung im unterschiedlich behandelten Wasser geeignet ist, in weiter bevorzugter Weise von ca. 40 bis 55 kHz durchgeführt, in weiterer bevorzugten Weise bei ca. 50 kHz.

Damit konnte bei Versuchen in unterschiedlichen Schwimmbecken eine maximale Kommunikationsdistanz von 60 bis 80 m ohne Sichtverbindung erzielt werden bzw. von mehr als 100 m mit Sichtverbindung. Die erreichbare Distanz hängt dabei hauptsächlich von der Beckenform, den Beckenmaterialen und der Wasserzusammensetzung ab.

Durch die Modulation in dem Modem 13 werden die von der Steuereinheit 11 erzeugten Steuerbefehle und/oder -daten in eine zur Übertragung geeignete Form gebracht. Als Modulation für die zu übertragenden Daten und Befehle kann beispielsweise eine Multiton-Modulation , welches auch als orthogonales Frequenzmultiplexverfahren (OFDM) bezeichnet wird, mit beispielsweise 50 Tönen im Abstand von ca. 100 Hz gewählt werden, wobei jeder Einzelton mit einer Standard-Modulation wie beispielsweise Frequenzumtastung (FSK) mit einem Hub von ca. 25 Hz moduliert werden kann.

Diese Art von Kombination von Modulationen ist für eine robuste Kommunikation mit langem Nachhall und Doppler-Frequenzverschiebungen bis 25 Hz ausgelegt. In einem Chromstahlbad gibt es beispielsweise einen Nachhall von einigen 100 ms, und der genannte Bereich für Doppler-Frequenzverschiebungen berücksichtigte reale Wasserströmungen, beispielsweise in der Nähe von Wasserdüsen, und gängige Robotergeschwindigkeiten bei der Unterwasserreinigung.

Die Kommunikation kann beispielsweise halb-duplex mit wechselseitiger Datenübermittlung in 2 getrennten Frequenzbändern von je 5 kHz Bandbreite erfolgen oder simplex mit wechselseitiger Datenübermittlung in einem einzigen Frequenzband von 10 kHz.

Bei der Übertragung werden kleine Datenpakete, beispielsweise mit ca. 30 Info-Bits, zur Steuerung und Überwachung der Roboter ausgetauscht. Die Latenzzeit der Datenpakete ist dabei deutlich kleiner als 1s.

Ein Datenpaket besteht beispielsweise aus einem 50-Bit-Multiton von 100 bis 200 ms Dauer und kann mit Hilfe der Schnellen Fouriertransformation (FFT) effizient demoduliert werden. Die 30 lnfobits in einem Datenpaket können mit Vorwärtsfehlerkorrektur (FEC) beispielsweise mit Hilfe von Bose-Chaudhuri-Hocquenghem-Codes (BCH-Codes) mit ca. 20 zusätzlichen Bits gegen Übertragungsfehler geschützt werden. Zusätzlich kann eine zyklische Redundanzprüfung (CRC) zur Detektion nicht erkannter Übertragungsfehler vorgesehen sein.

Nach der Aussendung eines Datenpakets muss eine Wartezeit (guard time) von ca. 200 ms bzw. das Abklingen des Nachhalls abgewartet werden, bis wieder ein Datenpaket in dem gleichen Halbband ausgesendet werden kann.

Durch das Ausrüsten des Unterwasserreinigungsroboters mit einer Batterie als Energiequelle und die drahtlose Kommunikation über Ultraschallsignale können bei diesem Unterwasserreinigungssystem die durch ein hinterhergezogenes Kabel möglicherweise auftretende Probleme wie das oben beschriebene Verheddern oder Blockieren vermieden werden. Der Unterwasserreinigungsroboter erhält eine maximale Bewegungsfreiheit, wodurch eine automatische flächendeckende Reinigung eines Wasserbeckens auch bei schwierigen Beckenformen mit Einbauten und Inseln ermöglicht wird.

Dabei hat sich die drahtlose Unterwasserkommunikation mit Ultraschall als besonders vorteilhaft erwiesen. In ähnlicher Form wie oben für die Übertragung von der Steuereinheit zu dem Unterwasserreinigungsroboter beschrieben kann auch eine Übertragung in umgekehrter Richtung erfolgen.

Generell können als Ultraschalltransducer Single-Beam- oder Multi-Beam-Transducer verwendet werden. Durch Multi-Beam-Transducer kann der Abstrahlwinkel vergrössert sein bis hin zu einem omni-direktionalen Transducer, der in alle Richtungen ausstrahlt.

Der Unterwasserreinigungsroboter kann so programmiert sein, dass er, wenn der Empfang zu schwach wird oder ausfällt, wendet und dahin zurückfährt, wo er vorher besseren Empfang hatte. Er kann auch so programmiert sein, dass er bei Abbruch der Kommunikation (beispielsweise durch Spannungsausfall der Steuereinheit) stoppt und wartet, bis wieder ein Signal zur Verfügung steht. Ferner kann er auch so programmiert sein, dass er nach Abschluss der Reinigung selbsttätig in die Ausgangsposition zurück fährt. Ferner kann er auch so programmiert sein, dass in dem Fall, in dem die Restkapazität der Batterie einen vorbestimmten Wert unterschreitet, selbsttätig in die Ausgangsposition zurück fährt.

Die Ultraschallsignale können auch für Abstandsmessungen und zur Unterstützung der Navigation des Unterwasserreinigungsroboters in dem Wasserbecken verwendet werden. So kann der Unterwasserreinigungsroboter beispielsweise aus den gesendeten und empfangenen Ultraschallsignalen einen Abstand zur Seitenwand des Wasserbeckens ermitteln und in Wandnähe automatisch wenden. Er kann beispielsweise auch durch Mehrfachmessungen erkennen, ob die Seitenwand gerade ist und sich danach ausrichten, oder ob sie eine beliebige Freiform hat.

Ferner können Ultraschalltransducer auch zum Erfassen von Daten verwendet werden, die Wasser- und Pool-Qualität betreffen. Dadurch können beispielsweise auch bestimmte Referenzdaten vor und nach der Reinigung ermittelt und verglichen werden. Es können beispielsweise durch einen Teachvorgang unter definierter Bedingung (sauberes Becken und Wasser) Referenzdaten gewonnen werden und bei einer Abweichung entsprechende Meldungen ausgegeben und/oder Maßnahmen eingeleitet werden.

Für das Auftauchen des Unterwasserreinigungsroboters kann beispielsweise Luft von oberhalb der Wasseroberfläche angesogen und in eine Auftauchglocke gepumpt werden. Das kann beispielsweise mittels einer Luftpumpe über einen Schlauch erfolgen, dessen freies Ende von einer Boje oberhalb der Wasseroberfläche gehalten wird. Alternativ kann mit einer Luft-Expansions-Patrone oder ähnlichem im Roboter komprimierte Luft in die Auftauchglocke freigegeben werden.

Für das Abtauchen kann die Luft in der Auftauchglocke beispielsweise durch eine zur Reinigung dienende Saugpumpe des Unterwasserreinigungsroboters entlüftet werden. Dadurch kann der Unterwasserreinigungsroboter zunächst in einen definierten Schwebezustand an der Wasseroberflache gebracht werden und anschliessend schonend auf den Grund abgesenkt werden.

## Patentansprüche

1. System (100) zur Unterwasserreinigung, enthaltend
einen Unterwasserreinigungsroboter (20), der dazu ausgebildet ist, unterhalb einer Wasseroberfläche (7) eines Wasserbeckens (1) betrieben zu werden, und
eine Steuereinheit (11) zum Steuern des Unterwasserreinigungsroboters (20),
wobei der Unterwasserreinigungsroboter (20) enthält:
eine Fortbewegungseinrichtung (23) zum Fortbewegen des Unterwasserreinigungsroboters (20) unter Wasser,
eine Reinigungseinrichtung (24) zum Reinigen eines unter Wasser befindlichen Objekts (2, 3),
eine Steuereinrichtung (25) zum Steuern der Fortbewegungseinrichtung (23) und/oder der Reinigungseinrichtung (24) und
eine Kommunikationseinrichtung (26, 27) zum Empfangen und/oder Senden von Signalen von ausserhalb des Unterwasserreinigungsroboters (20), und umgekehrt,
wobei die Kommunikationseinrichtung einen ersten Ultraschalltransducer (27) zum Empfangen von unter Wasser übertragenen Ultraschallsignalen enthält,
wobei die Kommunikationseinrichtung dazu ausgebildet ist, den empfangenen Ultraschallsignalen (39) entsprechende elektrische Signale an die Steuereinrichtung (25) weiterzuleiten, und
wobei das System ferner einen zweiten Ultraschalltransducer (32) enthält, der mit der ausserhalb des Wasserbeckens angeordneten Steuereinheit (11) verbunden ist und dazu ausgebildet ist, unterhalb der Wasseroberfläche (7) in dem Wasserbecken (1) angeordnet zu werden, zum Umwandeln von durch die Steuereinheit (11) ausgegebenen Signalen in Ultraschallsignale und zum Abstrahlen der Ultraschallsignale unter Wasser.

2. System (100) gemäss Anspruch 1, bei dem der Unterwasserreinigungsroboter (20) weiter ein erstes Modem (26) enthält zum Demodulieren der den empfangenen Ultraschallsignalen (39) entsprechenden elektrische Signale und zum Weiterleiten der demodulierten Signale an die Steuereinrichtung (25).

3. System (100) gemäss Anspruch 1 oder 2, bei dem die Kommunikationseinrichtung (26, 27) dazu ausgebildet ist, den empfangenen Ultraschallsignalen entsprechende Ultraschallsignale wieder über den ersten Ultraschalltransducer (27) abzustrahlen.

4. System (100) Unterwasserreinigungsroboter (20) gemäss einem der Ansprüche 1 bis 3, bei dem der Unterwasserreinigungsroboter (20) weiter eine Batterie (21) enthält zum Versorgen der Fortbewegungseinrichtung (23) und/oder der Reinigungseinrichtung (24) mit elektrischer Energie,
wobei die Batterie (21) vorzugsweise wiederaufladbar ausgebildet ist und
der Unterwasserreinigungsroboter (20) vorzugsweise weiter externe Anschlüsse (22a, 22b) enthält, die mit der Batterie (21) verbunden sind, zum Wiederaufladen der Batterie (21) mit von aussen zugeführter elektrischer Energie.

5. System (100) gemäss einem der Ansprüche 1 bis 4, das weiter ein Modem (13) enthält, das in der Steuereinheit (11) enthalten oder mit ihr verbunden ist, zum Modulieren der durch die Steuereinheit ausgegebenen Signale und zum Weiterleiten der modulierten Signale zu dem zweiten Ultraschalltransducer (32).

6. System (100) gemäss einem derAnsprüche 1 bis 5, das zwei oder mehr Unterwasserreinigungsroboter (20) gemäss einem der Ansprüche 1 bis 4 enthält.

7. Verfahren zum Steuern eines unter einer Wasseroberfläche (7) arbeitenden Unterwasserreinigungsroboters, vorzugsweise in einem System (100) zur Unterwasserreinigung gemäss einem der Ansprüche 1 bis 6, mit den Schritten:
Erzeugen (102) von Steuerbefehlen und/oder -daten in einer ausserhalb des Wasserbeckens angeordneten Steuereinheit (11),
Übertragen (103) der Steuerbefehle und/oder -daten als elektrische Signale zu einem unter der Wasseroberfläche (7) angebrachten zweiten Ultraschalltransducer (32),
Umwandeln (104) der elektrischen Signale in Ultraschallsignale mittels des zweiten Ultraschalltransducers (32),
Übertragen (105) der Ultraschallsignale über eine Unterwasserultraschallstrecke (39) zu dem Unterwasserreinigungsroboter (20),
Empfangen (106) der übertragenen Ultraschallsignale und Umwandeln der empfangenen Ultraschallsignale in elektrische Signale zum Steuern des Unterwasserreinigungsroboters (20) mittels eines an dem Unterwasserreinigungsroboter (20) angebrachten ersten Ultraschalltransducers (27).

8. Verfahren gemäss Anspruch 7, bei dem
die elektrischen Signalen zum Steuern des Unterwasserreinigungsroboters (20) vor dem Umwandeln in Ultraschallsignale mittels eines zweiten Modems (13) moduliert (103) werden und
die von dem ersten Ultraschalltransducer (27) ausgegebenen elektrischen Signale mittels eines ersten Modems (26) demoduliert (107) werden.

9. Verfahren gemäss Anspruch 8, bei dem zur Modulation eine Multiton-Modulation verwendet wird, vorzugsweise mit 50 Tönen im Abstand von ca. 100 Hz,
wobei vorzugsweise jeder Einzelton mit einer Frequenzumtastung (FSK) moduliert wird, in weiter bevorzugter Weise mit einem Hub von ca. 25 Hz.

10. Verfahren gemäss einem der Ansprüche 7 bis 9, bei dem zur Übertragung Datenpakete mit einer vorbestimmten Anzahl von Bits ausgesendet werden,
wobei vorzugsweise zwischen dem Aussenden aufeinanderfolgender Datenpakete eine vorbestimmte Wartezeit eingehalten wird zum Ausgleich von Reflektionen der Ultraschallsignale.

11. Verfahren gemäss einem der Ansprüche 7 bis 10, bei dem eine Datenübertragung sowohl von der Steuereinheit (11) aus zu dem Unterwasserreinigungsroboter (20) als auch von dem Unterwasserreinigungsroboter (20) aus zu der Steuereinheit (11) erfolgt.

12. Verfahren gemäss Anspruch 11, bei dem
die Datenübertragung halb-duplex in zwei getrennten Frequenzbändern einer vorbestimmten Bandbreite erfolgt oder
die Datenübertragung simplex in einem Frequenzband einer vorbestimmten Bandbreite erfolgt.

13. Verfahren gemäss einem der Ansprüche 7 bis 12, bei dem
der Unterwasserreinigungsroboter (20), wenn der Empfang der Ultraschallsignale zu schwach wird oder ausfällt, wendet und dahin zurückfährt, wo er vorher besseren Empfang hatte, und/oder
der Unterwasserreinigungsroboter (20), wenn der Empfang der Ultraschallsignale ausfällt, stoppt und wartet, bis wieder Ultraschallsignale empfangen werden, und/oder
der Unterwasserreinigungsroboter (20), wenn die Restkapazität der Batterie einen vorbestimmten Wert unterschreitet, selbsttätig in die Ausgangsposition zurück fährt, und/oder
der Unterwasserreinigungsroboter (20) nach Abschluss der Reinigung selbsttätig in die Ausgangsposition zurück fährt.

14. Verfahren gemäss einem der Ansprüche 7 bis 13, bei dem
die Ultraschallsignale für Abstandsmessungen und zur Unterstützung der Navigation des Unterwasserreinigungsroboters (20) in dem Wasserbecken (1) verwendet werden und/oder
die Ultraschalltransducer zum Erfassen von Daten verwendet werden, die Wasser- und Pool-Qualität betreffen.

15. Verfahren gemäss einem der Ansprüche 7 bis 14, bei dem für das Auftauchen des Unterwasserreinigungsroboters (20) Luft von oberhalb der Wasseroberfläche angesogen und in eine Auftauchglocke gepumpt wird und/oder
für das Auftauchen des Unterwasserreinigungsroboters (20) mit einer Luft-Expansions-Patrone komprimierte Luft in einer Auftauchglocke freigegeben wird und/oder
für das Abtauchen des Unterwasserreinigungsroboters (20) die Luft in einer Auftauchglocke durch eine Saugpumpe abgesaugt wird.

## Claims

1. A system (100) for underwater cleaning, containing an underwater cleaning robot (20) which is designed to be operated below a water surface (7) of a water basin (1), and
a control unit (11) for controlling the underwater cleaning robot (20),
wherein the underwater cleaning robot (20) comprises:
a locomotion device (23) for moving the underwater cleaning robot (20) under water,
a cleaning device (24) for cleaning an object under water (2, 3),
a control device (25) for controlling the locomotion device (23) and/or the cleaning device (24) and
a communication device (26, 27) for receiving and/or transmitting signals from outside the underwater cleaning robot (20), and vice versa,
wherein the communication device comprises a first ultrasonic transducer (27) for receiving ultrasonic signals transmitted under water,
wherein the communication device is designed to transmit electrical signals corresponding to the received ultrasonic signals (39) to the control device (25), and
wherein the system furthermore comprises a second ultrasonic transducer (32) which is connected to the control unit (11) located outside the water basin and is designed to be located below the water surface (7) in the water basin (1) for converting signals emitted by the control unit (11) into ultrasonic signals and for emitting the ultrasonic signals underwater.

2. The system (100) according to Claim 1, wherein the underwater cleaning robot (20) furthermore comprises a first modem (26) for demodulating the electrical signals corresponding to the received ultrasonic signals (39) and for forwarding the demodulated signals to the control device (25).

3. The system (100) according to Claim 1 or 2, wherein the communication means (26, 27) is designed to emit ultrasonic signals corresponding to the received ultrasonic signals via the first ultrasonic transducer (27) again.

4. The system (100) an underwater cleaning robot (20) according to any one of claims 1 to 3, wherein the underwater cleaning robot (20) furthermore comprises a battery (21) for supplying electrical power to the locomotion device (23) and/or the cleaning device (24), wherein the battery (21) is preferably designed to be rechargeable, and
the underwater cleaning robot (20) preferably also comprises external connections (22a, 22b) connected to the battery (21) for recharging the battery (21) with electrical power supplied from the outside.

5. The system (100) according to any one of the Claims 1 to 4, which furthermore comprises a modem (13) contained within or connected to the control unit (11) for modulating the signals emitted by the control unit and for forwarding the modulated signals to the second ultrasonic transducer (32).

6. The system (100) according to any one of the Claims 1 to 5 comprising two or a plurality of underwater cleaning robots (20) according to any one of the Claims 1 to 4.

7. A method for controlling an underwater cleaning robot operating under a water surface (7), preferably in a system (100) for underwater cleaning according to any one of the Claims 1 to 6, comprising the steps:
generating (102) control commands and/or data in a control unit (11) located outside the water basin,
transmitting (103) the control commands and/or data as electrical signals to a second ultrasonic transducer (32) mounted below the water surface (7),
converting (104) the electrical signals into ultrasonic signals by means of the second ultrasonic transducer (32),
transmitting (105) the ultrasonic signals via an underwater ultrasonic link (39) to the underwater cleaning robot (20),
receiving (106) the transmitted ultrasonic signals and converting the received ultrasonic signals into electrical signals for controlling the underwater cleaning robot (20) by means of a first ultrasonic transducer (27) attached to the underwater cleaning robot (20).

8. The method according to Claim 7 wherein
the electrical signals for controlling the underwater cleaning robot (20) are modulated by means of a second modem (13) before conversion into ultrasonic signals (103), and
the electrical signals emitted by the first ultrasonic transducer (27) are demodulated (107) by means of a first modem (26).

9. The method according to Claim 8 wherein multitone modulation is used for modulation, preferably with 50 sound tones within an interval of approximately 100 Hz, wherein each individual tone is preferably modulated with a frequency shift keying (FSK), in another preferred manner at a stroke of approx. 25 Hz.

10. The method according to any one of the Claims 7 to 9, wherein data packets with a predetermined number of bits are sent out for transmission,
wherein a predetermined waiting time is preferably observed between the transmission of consecutive data packets in order to compensate for reflections of the ultrasonic signals.

11. The method according to any one of the Claims 7 to 10, wherein data transmission occurs both from the control unit (11) to the underwater cleaning robot (20) and from the underwater cleaning robot (20) to the control unit (11).

12. The method according to Claim 11, wherein
the data transmission is half-duplex within two separate frequency bands of a predetermined bandwidth, or
the data transmission is simplex within a frequency band of a predetermined bandwidth.

13. The method according to any one of Claims 7 to 12, wherein
the underwater cleaning robot (20), if the reception of the ultrasonic signals becomes too weak or fails, turns around and returns to where it had better reception before, and/or
the underwater cleaning robot (20), if the reception of the ultrasonic signals fails, stops and waits until ultrasonic signals are received again, and/or
the underwater cleaning robot (20), if the remaining capacity of the battery falls below a predetermined value, automatically returns to the starting position, and/or
the underwater cleaning robot (20) automatically returns to the starting position after cleaning has been completed.

14. The method according to any one of the Claims 7 to 13, wherein
the ultrasonic signals are used for distance measurements and to support the navigation of the underwater cleaning robot (20) in the water basin (1), and/or
the ultrasonic transducers are used to collect data related to water and pool quality.

15. The method according to any one of the Claims 7 to 14, wherein for the surface of the underwater cleaning robot (20) air is sucked in from above the surface of the water and pumped into a surface bell and/or for the surface of the underwater cleaning robot (20) compressed air is released in a surface bell with an air expansion cartridge, and/or
for the submersion of the underwater cleaning robot (20), the air in a diving bell is sucked out by a suction pump.

## Revendications

1. Système (100) pour le nettoyage en immersion, contenant
un robot de nettoyage en immersion(20), qui est constitué pour être utilisé en dessous d'une surface d'eau (7) d'un bassin (1), et
une unité de commande (11) pour commander le robot de nettoyage en immersion (20),
sachant que le robot de nettoyage en immersion (20) contient :
un dispositif de déplacement (23) pour déplacer le robot de nettoyage en immersion (20) sous l'eau,
un système de nettoyage (24) pour nettoyer un objet se trouvant sous l'eau (2, 3),
un dispositif de commande (25) pour commander le dispositif de déplacement (23) et/ou le système de nettoyage (24), et
un système de communication (26, 27) pour recevoir et/ou envoyer des signaux depuis l'extérieur du robot de nettoyage en immersion (20) et vice versa,
sachant que le système de communication contient un premier transducteur d'ultrasons (27) pour recevoir des signaux d'ultrasons transmis sous l'eau,
sachant que le système de communication est constitué pour transmettre les signaux électriques correspondant aux signaux d'ultrasons (39) reçus au dispositif de commande (25), et
sachant que le système contient en plus un deuxième transducteur d'ultrasons (32), qui es relié à l'unité de commande (11) disposée en dehors du bassin et est constitué pour être disposé en dessous de la surface de l'eau (7) dans le bassin (1), pour convertir des signaux émis par l'unité de commande (11) en signaux d'ultrasons et pour dissiper les signaux d'ultrasons sous l'eau.

2. Système (100) selon la revendication 1, pour lequel le robot de nettoyage en immersion (20) contient en plus un premier modem (26) pour démoduler les signaux électriques correspondant aux signaux d'ultrasons (39) reçus et pour transmettre les signaux démodulés au dispositif de commande (25).

3. Système (100) selon l'une quelconque des revendications 1 ou 2, pour lequel système de communication (26, 27) est constitué pour dissiper à nouveau par le biais du premier transducteur d'ultrasons (27) les signaux d'ultrasons correspondant aux signaux d'ultrasons reçus.

4. Système (100) de robot de nettoyage en immersion (20) selon l'une quelconque des revendications 1 à 3, pour lequel le robot de nettoyage en immersion (20) contient en plus une batterie (21) pour alimenter le dispositif de déplacement (23) et/ou le système de nettoyage (24) en énergie électrique,
sachant que la batterie (21) est constituée de préférence pouvant être rechargée, et
le robot de nettoyage en immersion (20) contient de préférence en plus des connexions extérieures (22a, 22b), qui sont reliées à la batterie (21) pour recharger la batterie (21) en énergie électrique alimentée depuis l'extérieur.

5. Système (100) selon l'une quelconque des revendications 1 à 4, qui contient en plus un modem (13), qui est contenu dans l'unité de commande (11) ou relié à celle-ci pour moduler les signaux émis par l'unité de commande et pour transmettre les signaux modulés au deuxième transducteur d'ultrasons (32).

6. Système (100) selon l'une quelconque des revendications 1 à 5, qui contient deux robots de nettoyage en immersion (20) ou plus selon l'une quelconque des revendications 1 à 4.

7. Procédé de commande d'un robot de nettoyage en immersion fonctionnant sous une surface d'eau (7),
de préférence dans un système (100) pour le nettoyage sous l'eau selon l'une quelconque des revendication 1 à 6,
avec les étapes :
génération (102) d'ordres de commande et/ou de données de commande dans une unité de commande (11) disposée en dehors du bassin,,
transmission (103) des ordres de commande et/ou données de commande sous la forme de signaux électriques à un deuxième transducteur d'ultrasons (32) placé sous la surface de l'eau (7),
conversion (104) des signaux électriques en signaux d'ultrasons au moyen du deuxième transducteur d'ultrasons (32),
transmission (105) des signaux d'ultrasons (39) par une trajectoire d'ultrasons sous l'eau vers le robot de nettoyage en immersion (20),
réception (106) des signaux d'ultrasons transmis et conversion des signaux d'ultrasons reçus en signaux électriques pour commander le robot de nettoyage en immersion (20) au moyen d'un premier transducteur d'ultrasons (27) monté sur le robot de nettoyage en immersion (20).

8. Procédé selon la revendication 7, pour lequel
les signaux électriques sont modulés (103) au moyen d'un deuxième modem (13) pour commander le robot de nettoyage en immersion (20) avant la conversion en signaux d'ultrasons et
les signaux électriques émis par le premier transducteur d'ultrasons (27) sont démodulés (107) au moyen d'un premier modem (26).

9. Procédé selon la revendication 8, pour lequel
une modulation multiton est utilisée pour la modulation, de préférence avec 50 tons à intervalle d'environ 100 Hz,
sachant de préférence que chaque ton individuel est modulé avec une manipulation de fréquence (FSK), de façon plus préférée avec un écart d'environ 25 Hz.

10. Procédé selon l'une quelconque des revendications 7 à 9 pour lequel des paquets de données sont envoyés pour transmission avec un nombre prédéterminé de bits, sachant de préférence qu'un temps d'attente prédéterminé est observé entre l'envoi des paquets de données successifs pour la compensation des renvois des signaux d'ultrasons.

11. Procédé selon l'une quelconque des revendications 7 à 10 pour lequel une transmission de données a lieu tant de l'unité de commande (11) au robot de nettoyage en immersion (20) que du robot de nettoyage en immersion (20) à l'unité de commande (11).

12. Procédé selon la revendication 11 pour lequel
la transmission de données a lieu en semi-duplex en deux bandes de fréquence séparées d'une largeur de bande prédéterminée
ou
la transmission de données a lieu en simplex dans une bande de fréquence d'une largeur de bande prédéterminée.

13. Procédé selon l'une quelconque des revendications 7 à 12 pour lequel
le robot de nettoyage en immersion (20), lorsque la réception des signaux d'ultrasons est trop faible ou fait défaut, tourne et revient donc en ce sens, où il avait la meilleure réception auparavant, et/ou
le robot de nettoyage en immersion (20), lorsque la réception des signaux d'ultrasons fait défaut, s'arrête et attend jusqu'à ce que des signaux d'ultrasons soient à nouveau reçus, et/ou
le robot de nettoyage en immersion (20), lorsque la capacité résiduelle de la batterie est inférieure à une valeur prédéterminée, revient automatiquement dans la position de départ, et/ou
le robot de nettoyage en immersion (20) revient dans la position de départ automatiquement après achèvement du nettoyage.

14. Procédé selon l'une quelconque des revendications 7 à 13 pour lequel les signaux d'ultrasons pour les mesures de distance et pour l'assistance de navigation du robot de nettoyage en immersion (20) sont utilisés dans le bassin (1), et/ou
les transducteurs d'ultrasons sont utilisés pour la saisie de données qui concernent la qualité de l'eau et du bassin.

15. Procédé selon l'une quelconque des revendications 7 à 14 pour lequel de l'air est aspiré depuis le dessus de la surface de l'eau pour l'émersion du robot de nettoyage en immersion (20) et est pompé dans une cloche d'émersion, et/ou
de l'air comprimé avec une cartouche d'expansion d'air est libéré dans une cloche d'émersion pour l'émersion robot du nettoyage en immersion (20), et/ou
l'air est aspiré par une pompe aspirante dans une cloche d'émersion pour l'émersion du robot de nettoyage en immersion (20).
